# EUROPEAN PATENT APPLICATION

(11) **EP 1 873 767 A1**
(43) Date of publication of application: **02.01.2008**
(21) Application number: 06116477.8
(22) Date of filing: 30.06.2006
(51) Int. Cl.: G11B 7/085, G11B 7/08, G11B 7/09

(54) **Optical pickup and optical recording or reproducing apparatus**

(71) Applicant: DEUTSCHE THOMSON-BRANDT GMBH, 78048 Villingen-Schwenningen (DE)
(72) Inventor: Tabor, Günter, 78056 Villingen-Schwenningen (DE); Dupper, Rolf, 78050 Villingen-Schwenningen (DE); Suzuki, Tsuneo, 78087 Mönchweiler (DE); Bammert, Michael, 78739 Hardt (DE)
(74) Representative: Kurth, Dieter

(57) **Abstract**

An optical pickup and optical recording or reproducing apparatus incorporating such an optical pickup is recommended, which comprises an adjustment means to adjust the actuator plate of the optical pickup, which holds the objective lens, by moving the actuator plate AP on a straight reference surface arranged in the slide base of the optical pickup to a position as defined by alignment equipment to compensate tolerances between traverse mechanism and disc motor. The adjustment means is a screw for moving the actuator plate on the straight reference surface inside the slide base against a counter spring and the alignment equipment is formed by the optical pickup, which irradiates a light beam to an optical disc inserted into the optical recording or reproducing apparatus and receives a return light from the disc as well as means for moving the optical pickup radially of the spinning optical disc. The proposed arrangement allows less tight tolerances of single members and requires only little outlay, because the optical pickup requires a small number of single members to assemble an optical pickup for reading of information from and/or recording of information to a disc.

## Description

### FIELD OF THE INVENTION

The invention relates to an optical pickup and optical recording or reproducing apparatus for reading and/or writing information from or on a disc-like optical recording medium such as an optical disc, magneto-optic disc or holographic recording medium.

### BACKGROUND OF THE INVENTION

Disc-like optical recording media as optical discs, magneto- optic discs or holographic recording media, and optical pickups for reading and/or writing information from or on disc-like optical recording media are well known. It is also well known to compensate tolerances between a traverse mechanism moving a pickup or so-called optical head device and disc motor by adjusting the position of the disc motor inside the traverse mechanical deck in respect to the guiding shafts of the optical head device or so-called optical pickup. Therefore the disc motor is mounted on a separate metal plate which can be adjusted perpendicular to the guiding shaft in an optical recording or reproducing apparatus. However, that means that the centre or centre line of the traverse mechanism is adjusted to a shifted centre line, which is not the right centre line. The centre of the traverse mechanism forms commonly the reference centre of the set. Therefore said solution has the disadvantage that due to such an adjustment the reference centre of the complete unit will be misaligned. This has a negative impact on the set design, because the reference centre is important for the set design in order to ensure a reliable loading and clamping of the disc. The misalignment of the reference centre forms an additional tolerance in the set design and is different from unit to unit. The additional tolerance has to be considered for the set design and causes problems for the set manufacturer in view of the loading and clamping behaviour of the final apparatus. Due to several tolerances as tolerances of the disc to the guiding shaft inside traverse mechanism, tolerances between the guiding shaft hole and the actuator plate fixation inside the optical pickup, tolerances between actuator plate fixation and objective lens inside the actuator plate, the position of the optical lens is slightly shifted. This leads to so-called EF-phase problems, which have a negative impact on the track guidance in so-called three beam scanning systems. Very small tolerances of several parts of the apparatus are necessary to minimize the shift of the objective lens of the optical head device and the disc motor has to be mounted on a separate metal plate to be adjustable perpendicular to the guiding shaft.

Furthermore, several lens adjustment methods and adjustment mechanism are known, wherein the optical head is adjusted as single body in a direction in parallel to the optical axis of the object lens or several components of the optical head are manipulated with an adjustment mechanism to adjust relative position of the object lens with respect to the light source and inclination of the optical axis of the object lens.

### SUMMARY OF THE INVENTION

It is an aspect of the invention to overcome the above-mentioned drawbacks of the prior art by providing an optical pickup and an optical recording or reproducing apparatus incorporating the optical pickup capable of an easy and good adjustment between traverse mechanism and disc motor and it is a further aspect of the invention to align auxiliary beams scanning a disc-like optical recording medium for track guidance.

This is achieved by means of the features specified in independent claims. Advantageous embodiments of the invention are disclosed in the dependent claims.

An optical pickup is proposed having an adjustment means for moving an actuator plate, which holds the objective lens of the optical pickup, on a straight reference surface arranged in the slide base of the optical pickup to a position as defined by a centre line to achieve an alignment to a disc motor in an optical recording or reproducing apparatus. The adjustment means is a screw for moving and holding the actuator plate on the straight reference surface inside the slide base against a counter spring mounted on the slide base. The centre line is formed e.g. by a predetermined distance to at least one guide hole for a guide shaft in the slide base or by alignment equipment to which the optical pickup is applied. In an optical recording or reproducing apparatus which comprises an optical pickup having an adjustment means to adjust the actuator plate of the optical pickup, which holds the objective lens, by moving the actuator plate on a straight reference surface arranged in the slide base of the optical pickup to a position as defined by an alignment equipment, the alignment equipment to achieve an alignment between traverse mechanism and disc motor is formed by the optical pickup, which irradiates a light beam to an optical disc inserted into the optical recording or reproducing apparatus and receives a return light from the disc as well as means for moving the optical pickup radially and means for spinning the optical disc. The optical pickup is used to check whether a change of a phase difference in +-first order light received from the disc in case of a movement from the innermost circumference to the outermost circumference of the disc occurs and an adjustment with the adjustment means moving the actuator plate on a straight reference surface in the slide base is made such that the phase difference between the +-first order light becomes a predetermined value. The main beam or auxiliary beams provided by the optical pickup will be aligned to a reference centre line provided by said alignment equipment to achieve an optimal alignment between traverse mechanism and disc motor.

An adjustment means for moving the actuator plate is e.g. at least one eccentrically screw arranged in the slide base or so-called optical body of the optical pickup, which holds the actuator plate moveable towards a spring on the optical body. In an embodiment of the invention, the actuator plate has pins at both sides sliding on a straight reference surfaces in the optical body. In an further embodiment of the invention, the pins also form a turning point for an axial tilt adjustment and keep the actuator plate moveable and rotatable in the slide base of the optical pickup. At least one of said pins of the actuator plate is in engagement with said eccentrically screw for compensating tolerances between traverse mechanism and disc motor or for a so-called EF-phase adjustment. The abbreviation EF is generally used for so-called auxiliary beams of an optical three beam system, which is often used for tracking error detection in disc drive systems for reading information from and/or recording information to a disc. The three beams of an optical three beam system consisting of the 0-th order light and +- first order light positioned between which the 0-th order light is put and are used as laser beams emitted from the light source to detect tracking error by beam spot of the +- first order light. The auxiliary beams shall be arranged in such a way that they meet borders formed by an information track or a grove for recording or recorded information on the disc. Since rays of +-first order rotate with the 0-th order light of three beams being a centre with respect to recording tracks followed by movement from the innermost circumference to the outermost circumference of the disc, a displacement from a centre line passing through the centre of rotation of the disc or a so-called R dependence causes a change of phase difference in the +-first order light of the three beams. Therefore, a corresponding adjustment is required, which in known devices has been performed by an alignment of the position of the disc motor inside the traverse mechanical deck in respect to the guiding shafts of the optical pickup or by an adjustment unit, in which the optical pickup is adjusted as a single body so that the feed mechanism and the disc rotation drive mechanism are assembled with respect to base unites respectively provided with high accuracy at ideal positions with respect to the feed shaft serving as reference shaft with the inconvenience such that there exist unevenness in each assembling accuracy such as warp or inclination, ect. of the feed mechanism and the disc rotation drive mechanism or base chassis of base unit where the optical pickup is assembled with respect to the slide base for adjustment.

Furthermore, a lens adjustment mechanism is known, in which the optical pickup is adjusted as a single body on a base unit, which includes a slide base or so-called optical body on which the optical pickup is assembled and a feed shaft for movably supporting this slide base. The slide base, the holder supporting member and the light source are respectively separately held by said adjustment mechanism, and adjustment is made by relatively moving these respective portions by very small quantity. For this reason, it is impossible to carry out feed operation in inner and outer circumferential directions of the optical disc for adjustment. In order to carry out the feed operation in the above-described state, it is necessary to carry out movement so that relative positions are not changed. However, when the adjustment unit reads information from recording track of the adjustment optical disc, pit trains of the adjustment optical disc are recorded in spiral form from the inner circumferential side toward the outer circumferential side. For this reason, the object lens is gradually moved in the outer circumferential direction followed by rotation of the adjustment optical disc. In this adjustment unit, at the time of adjustment, the object lens of the optical pickup is moved in the outer circumferential direction of the adjustment optical disc, whereby it is changed from the state of zero of visual field swing to the state of visual field swing. For this reason, the optical axis of the object lens deviates or positional shifts with respect to the optical design centre hereinafter referred to as optical centre such as centre, etc. of the light source. This adjustment method has the problem that since the optical axis of the object lens deviates with respect to the optical centre so that the optical characteristic and a detected reproduction signal are also reduced. It becomes very difficult to carry out adjustment in the case where, e.g., the optical axis of the object lens is included to measure change of reproduction signal to allow the point to be measured to be in correspondence with the most favourable or best point to thereby adjust inclination of the optical axis of the object lens, etc..

Therefore, already an adjustment optical disc for optical pickup thus constituted that annular recording tracks are concentrically formed has been recommended. Thus, it becomes possible to allow the optical axis of the object lens of optical pickup to be adjusted to coincide with the optical design centre at all times. For this reason, it is possible to adjust the optical axis of the object lens with high accuracy.

However, an adjustment apparatus or adjustment mechanism, comprising an adjustment base on which the base unit in which an optical pickup to be adjusted is mounted, a lens adjustment mechanism for adjusting position of the object lens through lens holding mechanism and a base holding mechanism for holding the slide base of the base unit, as mentioned above, requires several holding means to be applied to the components of the optical pickup. The weight of the adjustment mechanism, which becomes removed after the adjustment procedure, has negative impact on the quality of the adjustment. Respectively arranged and formed positioning pins and positioning holes with a gap sufficient to movably adjust relative position between adjustable members are needed and an adhesive agent has to be filled into the gaps between the positioning holes and the positioning pins to keep the positions of the components. That means that such an adjustment mechanism requires a high expenditure and may be the reason why despite the disadvantages an adjustment of disc motor to the traverse guiding shaft has been used. Such an adjustment of the disc motor was necessary because in cases where the optical head is adjusted as single body in a direction in parallel to the optical axis of the object lens an additional adjustment perpendicular to the guiding shaft was not appropriate or an additional intermittent plate on the pickup would be needed.

Therefore, an optical pickup is recommended, which has means for moving the actuator plate holding the objective lens by e.g. at least one eccentrically screw arranged in the optical body of the optical pickup, which holds the actuator plate moveable on a straight reference surface towards a spring, both arranged in the so-called optical body or slide base. Two eccentrically screws are arranged in the optical body, for a more flexible adjustment and to be able to adjust the position of the objective lens in addition to a direction away from or towards the guiding of traverse mechanism for an angle.

Since the optical pickup holds the actuator plate moveable on a straight reference surface towards a spring on the slide base, tolerances between traverse mechanism and disc motor can be equalized by e.g. at least one eccentrically screw arranged in the slide base without to change the inclination of the light beam directed to the disc. A positional error in a direction perpendicular to a centre line passing through the centre of rotation of the disc, can be absorbed by adjusting the position of the objective lens driving mechanism relative to the optical body or so-called slide base forming a support plate for the objective lens driving mechanism.

The proposed optical pickup allows less tight tolerances of single members because the actuator plate which holds the objective lens is adjusted in respect to the guiding hole of the optical pickup inside alignment equipment or an optical recording or reproducing apparatus and achieves an easy and good adjustment and aligned auxiliary beams, that means an optimal aligned optical pickup.

Advantageously, the optical pickup according to the invention requires only little outlay, because the optical pickup requires a small number of single members to assemble an optical pickup for reading of information from and/or recording of information to a disc. Further, it improves the quality of a final adjustment, because the adjustment procedure my be checked and repeated several times due to the adjustable optical pickup, which holds the actuator plate adjustable towards a spring on the optical body and the adjustment procedure is performed with an optical pickup as finally used in a device for reading of information from and/or recording of information to a disc-like recording medium. Finally, the actuator plate being fixed after adjusted in position by an adhesive agent.

### BRIEF DESCRIPTION OF THE DRAWINGS

These objects and other objects, features and advantages of the present intention will become more apparent from the following detailed description of an embodiment of the present invention when taken in conjunction with the accompanying drawings, of which:
FIG. 1 is a perspective view showing the construction of an optical pickup according to the present invention,
FIG. 2 is a zoomed view showing an eccentrically screw in engagement with a pin of the actuator plate,
FIG. 3 is a perspective view showing the spring which holds the actuator plate,
FIG. 4 is a perspective view showing the actuator plate without means supporting the objective lens,
FIG. 5 is a perspective view showing two eccentrically screws,
FIG. 6 is a perspective view showing a slide base, which in connection with Fig. 3 to Fig. 6 forms an exploded perspective view showing the construction of the optical pickup,
FIG. 7 is a perspective view showing the actuator plate with a pin in engagement with an eccentrically screw,
FIG. 8 is a side view showing the directions of movement for EF-phase and tangential tilt adjustment,
FIG. 9 illustrates a so-called R dependence of the EF-phase on tracks of an optical disc,
FIG. 10 is a top view showing the construction of an optical drive,
FIG. 11 is a perspective view showing disc motor mounted on a separate metal plate in a conventional optical drive and
FIG. 12 is a perspective view showing the base plate of a conventional optical drive.

### DETAILED DESCRIPTION OF EMBODIMENTS

The invention is described exemplarily for an optical pickup in an optical recording or reproducing apparatus to compensate tolerances between traverse mechanism and disc motor. Reference signs are used with corresponding meanings through the Figures.

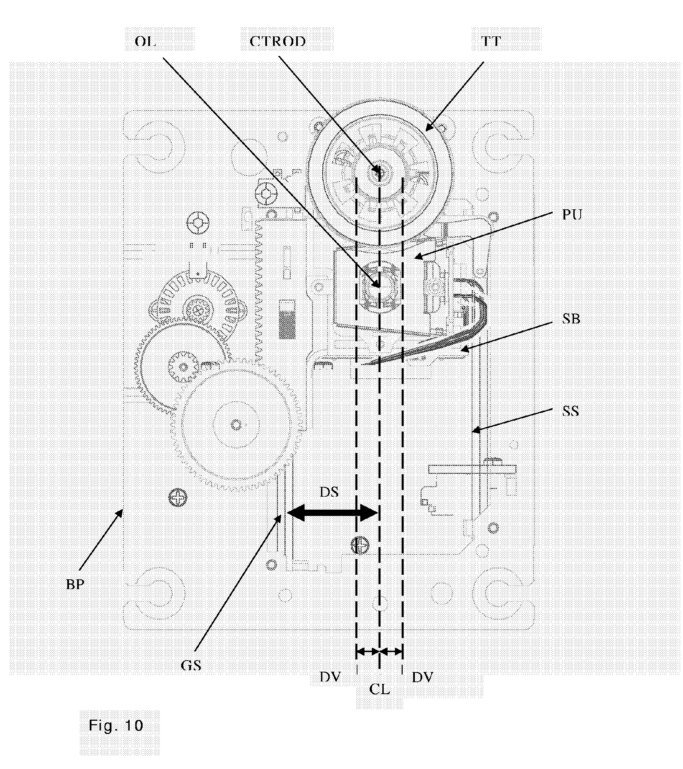

An optical recording or reproducing apparatus comprises an optical drive having an optical pickup PU for writing and/or reading information into or from a disc-like optical recording medium placed on a turntable TT as shown in Fig. 10 in a top view. The turntable TT is formed to have a generally disc-like shape, and has provided nearly in the center thereof a projection having a general shape of a truncated cone. When placed in position on the turntable TT, a not shown optical disc is fitted in the center thereof. Thus the optical disc is held at the center of a drive shaft of a disc motor on which the turntable TT spinning the optical disc is mounted. The drive shaft of the disc motor and the disc motor respectively forms in such way a centre of rotation CTROD of the disc.

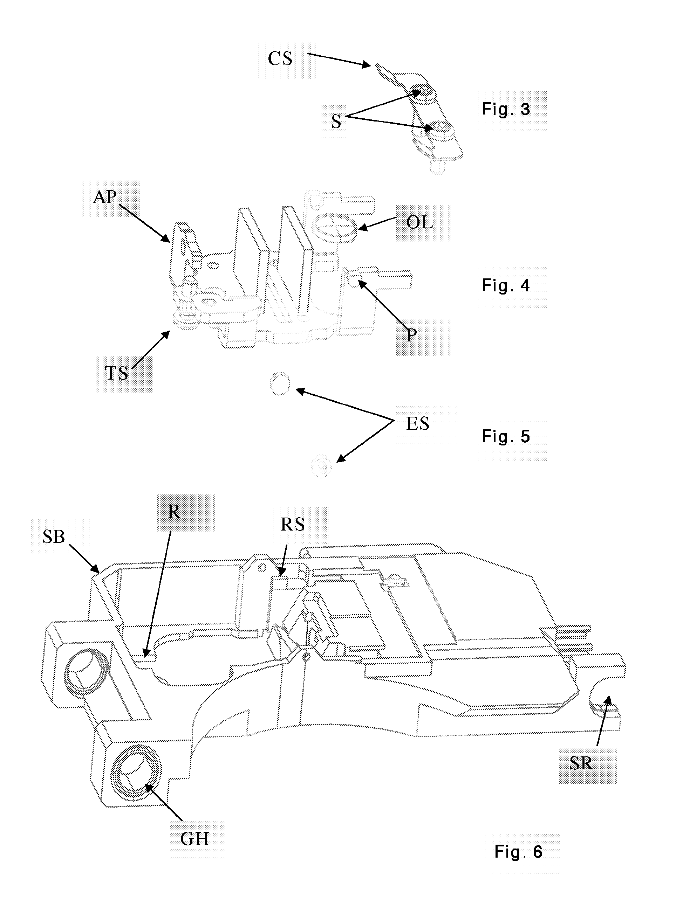

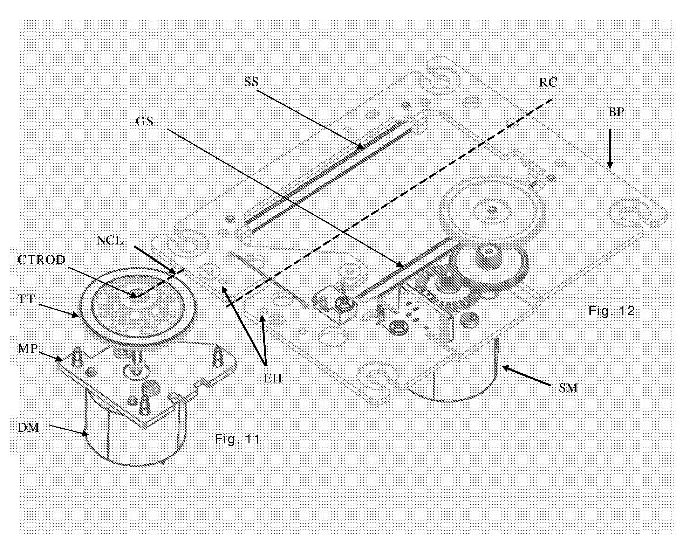

The optical pickup PU comprises a slide base SB movably supported by a guide shaft GS and a support shaft SS disposed on the chassis or so called base plate BP of the optical drive. The guide shaft GS and the support shaft SS are disposed in parallel to each other, and also in parallel to the top of the turntable TT. The slide base SB has a guide hole GH in which the guide shaft GS is penetrated and a support recess SR in which the support shaft SS is introduced, as shown in Fig. 6. The slide base SB is moved by a sled motor SM shown in Fig 12 disposed on the base plate BP in a direction away from or toward the turntable TT, radially to the not shown optical disc. The slide base SB moved along guide shaft GS and support shaft SS by the sled motor SM forms the so-called traverse mechanism of the optical drive on which the optical pickup PU with its objective lens OL is arranged. Dashed lines in parallel to the guide shaft GS and the support shaft SS illustrate in Fig. 10 that a distance DS between guide shaft GS and a centre line CL passing through the centre of rotation CTROD of the disc as well passing through the centre of the objective lens OL may vary due to several tolerances as tolerances of the disc or disc motor DM to the guiding shaft GS inside the traverse mechanism, tolerances between guiding shaft hole GH and an actuator fixation inside the optical pickup PU and tolerances between actuator fixation and objective lens OL inside the actuator. Such variations or deviations DV of the centre of rotation CTROD of the disc or of the objective lens OL from the centre line CL are illustrated by dashed lines at both sides of the centre line CL in Fig. 10.

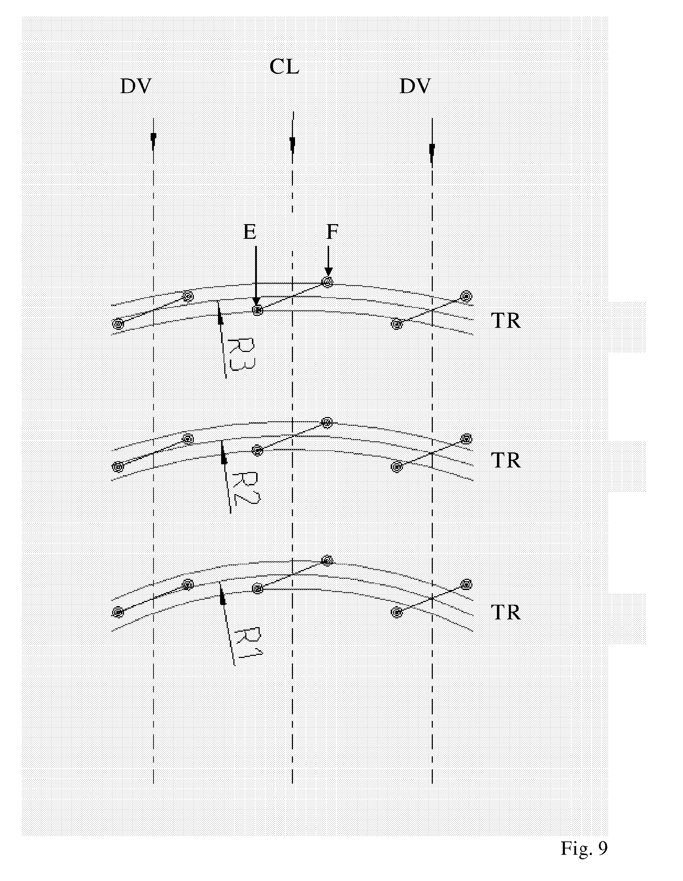

Deviations DV from the centre line CL lead to so-called EF-phase problems, which have a negative impact on the track guidance in so-called three beam scanning systems as shown in Fig. 9. Fig. 9 illustrates a so-called R dependence of the EF-phase on tracks TR of an optical disc. Each track TR is illustrated by three lines, which represent the centre and at both sides a border of the track TR. Said tracks TR may be annular concentric tracks TR or may be formed by a spiral track TR related to a not shown centre of rotation CTROD of the disc. So-called auxiliary beams E and F at both sides of a not shown main beam representing +-first order light provided by the optical pickup PU and meet the border of a track TR independent from a radial distance R1, R2, R3 to the centre of rotation CTROD, if the centre line CL passed through the centre of rotation CTROD of the disc. The auxiliary beams E and F, which are provided to keep a not shown main beam between the auxiliary beams E and F on a track TR are connected by a line for illustration purposes in Fig. 9. However, the auxiliary beams E and F leave the border of tracks TR in case of deviations DV from the centre line CL due to tolerances between the centre of rotation CTROD and the centre of the objective lens OL focusing the beams on the track TR, which leads to a phase shift depended on the direction of the deviation DV and on the radial distance R1, R2, R3 to the centre of rotation CTROD of the disc. That means that a reliable track guidance of a main beam requires an alignment between the centre of rotation CTROD of the disc or disc motor DM and the centre of the objective lens OL focusing the beams on the track TR. Furthermore, it has to be ensured that the optical axis of the objective lens OL and the surface of the optical disc are perpendicular to each other, which requires an inclination adjustment for reliable reading and/or writing information from or on a disc-like optical recording medium. To adjust such a inclination, a spherical adjusting mechanism already has been proposed for a conventional pickup, which comprises a spherical convexity formed on the bottom of a support plate abutting on the slide base SB or so-called optical body, and a spherical concavity formed on the top of the slide base SB on which the support plate abuts and in which the spherical convexity is fitted. The center of curvature of the spherical convexity is located at a position on the optical axis of the objective lens OL where the focused spot of the light beam having passed through the objective lens OL skewed about the center of curvature will be least off a focused spot which would be when the light beam passes through the objective lens OL not skewed. That means in the conventional optical pickup PU, the mounting angle of the biaxial actuator in relation to the slide base SB incorporating the light source is adjusted to keep the objective lens OL from skewing in relation to the disc. In conventional optical drives, tolerances between traverse mechanism moving the pickup PU and disc motor DM are compensated by adjusting the position of the disc motor DM inside the traverse mechanism in respect to the guiding shaft GS as shown in Fig. 11 and Fig. 12. Therefore, the disc motor DM is mounted on a separate metal plate MP which can be adjusted in elongated holes EH in the base plate BP perpendicular to the guiding shaft GS as shown in Fig. 11 and Fig.12. However, that means that the centre of rotation CTROD of the disc is adjusted to a new centre line NCL, with offset to a reference centre RC of the set with the disadvantage that the reference centre RC of the complete unit will be misaligned as shown in Fig. 12. This has a negative impact on a reliable loading and clamping of the disc.

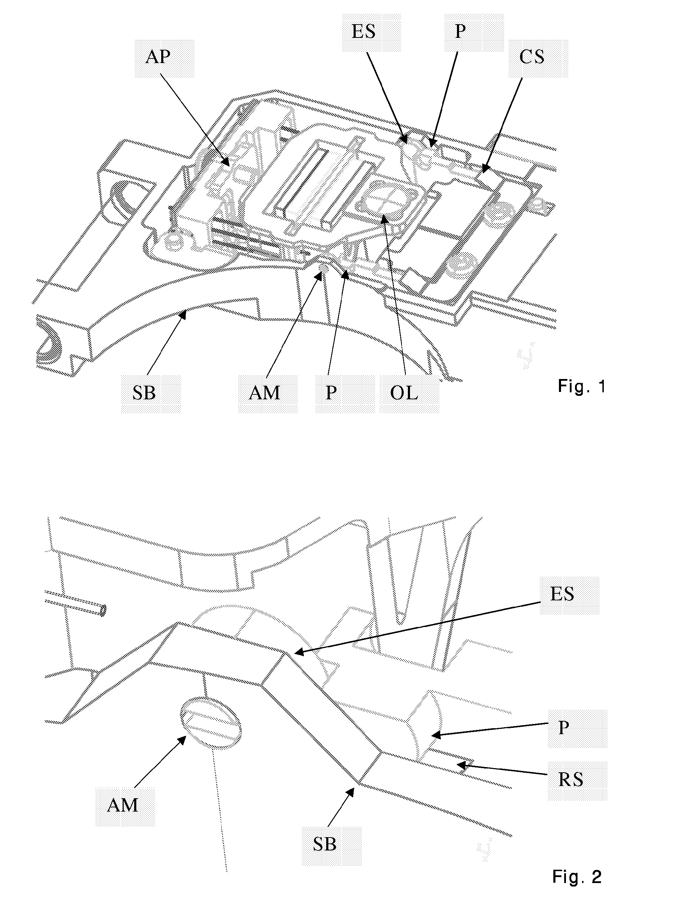

Therefore, an optical pickup PU and optical recording or reproducing apparatus incorporating such an optical pickup PU as shown in Fig. 1 to Fig. 8 is recommended, which comprises an adjustment means AM to adjust the actuator plate AP of the optical pickup PU, which holds the objective lens OL, by moving the actuator plate AP on a straight reference surface RS arranged in the slide base SB of the optical pickup PU to a position as defined by an alignment equipment of the optical recording or reproducing apparatus to achieve an alignment between traverse mechanism and disc motor DM. That means that the disc motor DM has not to be adjustable mounted on a separate metal plate MP and will be assembled to the base plate BP of the optical drive at a predetermined fixed position in view of the above mentioned reference centre RC of the set.

Figure 1 is a perspective view showing the construction of an optical pickup PU according to the present invention to achieve an easy and good adjustment between traverse mechanism and disc motor DM and to align auxiliary beams E, F scanning a disc-like optical recording medium for track guidance. According to the embodiment shown in Fig 1 the adjustment means AM is at least one eccentrically screw ES moving the actuator plate AP inside the slide base SB against a counter spring CS mounted on the slide base SB.

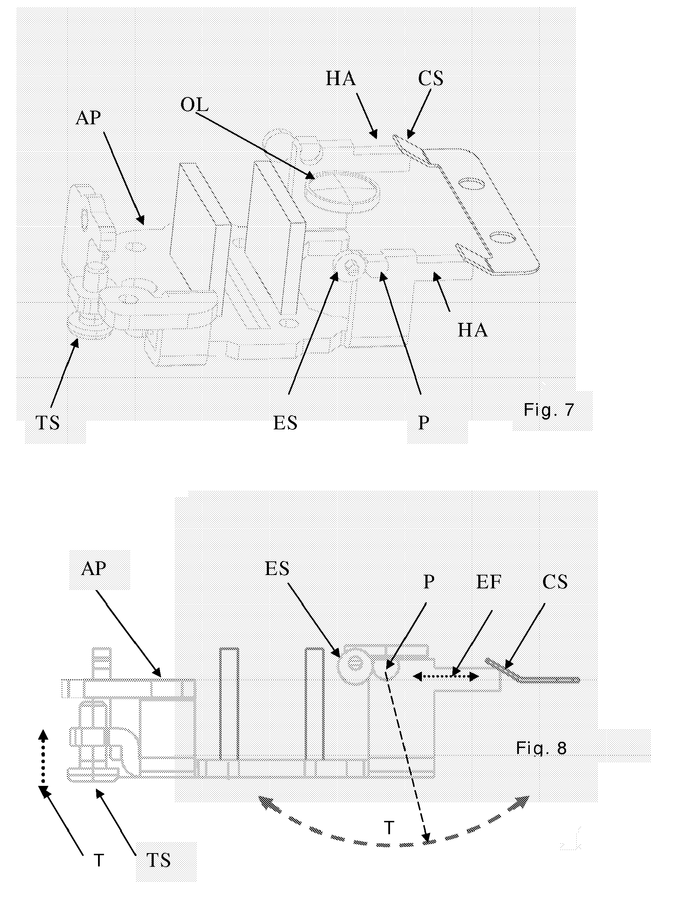

The actuator plate AP has pins P at both sides sliding on a straight reference surface RS shown in Fig. 2. The reference surface RS is arranged in the slide base SB. At least one of said pins P is in engagement with said eccentrically screw ES as shown in Fig. 2 and slides the actuator plate AP elastically supporting a lens holder holding the objective lens OL. The pins P keep the actuator plate AP moveable and rotatable in the slide base SB of the optical pickup PU and form in such a way also a turning point for a tangential or so-called axial tilt T adjustment as illustrated in Fig. 8. The actuator plate AP, which slides on a straight reference surface RS against the counter spring CS for an EF - phase adjustment is therefore provided with a tilt screw TS. The tilt screw TS is arranged opposite to the side, where the actuator plate AP is held by counter spring CS and is slidable kept in a recess R in slide base SB. The recess R, which is formed by a depression in the body of the slide base SB is shown in Fig. 6 and keeps the actuator plate AP moveable on the straight reference surface RS of the slide base SB. As shown in Fig. 8, the actuator plate AP can be caused to undergo positioning respectively with respect to the centre line CL and axial tilt T as the result of the fact that a set of holding arms HA that the actuator plate AP has are engaged with the counter spring CS as shown in Fig. 7. The actuator plate AP is held by the set of holding arms HA so that relative position with respect to the slide base SB is caused to undergo positioning with high accuracy by eccentrically screws ES and tilt screw TS. Fig. 6 illustrates furthermore the arrangement of guide hole GH and support recess SR in slide base SB as generally known and forms in connection with Fig. 3 to Fig. 5 an exploded perspective view showing the construction and elements of an embodiment of an optical pickup PU according to the invention. The optical pickup PU requires a small number of single members as the counter spring CS shown in Fig. 3 and to be mounted with two screws S on the slide base SB shown in Fig. 6 as well as the actuator plate AP shown in Fig. 4 and two eccentrically screws ES shown in Fig. 5 to assemble an optical pickup PU for reading of information from and/or recording of information to a disc.

The proposed arrangement allows less tight tolerances of single members because the actuator plate PL which holds the objective lens OL is adjustable in respect to the guiding hole GH of the optical pickup PU inside a specific alignment equipment or inside an optical recording or reproducing apparatus, wherein the alignment equipment is formed by the optical pickup PU, which irradiates a light beam to an optical disc inserted into the optical recording or reproducing apparatus and receives a return light from the disc and means for moving the optical pickup PU radially to a spinning optical disc. The optical pickup PU is used to check whether a change of a phase difference in +-first order light received from the disc in case of a movement from the innermost circumference to the outermost circumference of the disc occurs and adjustment with the adjustment means AM moving the actuator plate PL on a straight reference surface RS in the slide base SB is made such that the phase difference between the +-first order light becomes a predetermined value as e.g. 180 degree. That means that the optical pickup PU as a component may be pre-adjusted in a specific alignment equipment similar to an alignment equipment as formed by an optical recording or reproducing apparatus or by using the final optical recording or reproducing apparatus. Finally, the actuator plate AP being fixed after adjusted in position by an adhesive as e.g. an ultraviolet hardening type adhesive agent.

A radial tilt adjustment may be performed in a known manner by an adjustment of the guide shaft GS of the optical drive so that the feed mechanism and the disc rotation drive mechanism are assembled with respect to base unites respectively provided with high accuracy at ideal positions with respect to an adjustment optical disc serving as reference.

The proposed optical pickup PU can be used and configured in numerous different ways, with the result that the field of application and the implementation of the invention are not restricted to the exemplary embodiment specified here.

## Claims

1. Optical recording or reproducing apparatus incorporating an optical pickup (PU) having an actuator plate (PL) arranged on a slide base (SB), which holds the objective lens (OL) of the optical pickup (PU), and a disc motor (DM) to drive a disc-like recording medium on a turntable (TT) centred to a drive shaft of the disc motor (DM), comprising:
an adjustment means (AM) to adjust the actuator plate (PL) of the optical pickup (PU), which holds the objective lens (OL), by moving the actuator plate (PL) on a straight reference surface (RS) arranged in the slide base (SB) of the optical pickup (PU) to a position as defined by an alignment equipment of the optical recording or reproducing apparatus to achieve an alignment between a traverse mechanism moving the pickup (PU) and disc motor (DM).

2. Optical recording or reproducing apparatus according to claim 1, wherein the adjustment means (AM) is a screw for moving the actuator plate (AP) on the straight reference surface (RS) inside the slide base (SB) against a counter spring (CS).

3. Optical recording or reproducing apparatus according to claim 2, wherein the screw is an eccentrically screw (ES) moving the actuator plate (AP) inside the slide base (SB) against the counter spring (CS).

4. Optical recording or reproducing apparatus according to claim 1, wherein the actuator plate (AP) has at least one pin (P) holding the actuator plate (AP) movable by adjustment means (AM) on the straight reference surface (RS) arranged in the slide base (SB) against a counter spring (CS).

5. Optical recording or reproducing apparatus as set forth in claim 1, wherein the actuator plate (AP) has pins (P) at both sides, which hold the actuator plate (AP) movable by adjustment means (AM) on the straight reference surface (RS) arranged in the slide base (SB) and the pins (P) form a turning point for an axial tilt (T) adjustment of the optical pickup (PU).

6. Optical recording or reproducing apparatus according to claim 1, wherein the alignment equipment of the optical recording or reproducing apparatus is formed by the optical pickup (PU), which irradiates a light beam to an optical disc inserted into the optical recording or reproducing apparatus and receives a return light from the disc, means for moving the optical pickup (PU) radially of the optical disc and means for spinning the optical disc and wherein the optical pickup (PU) is used to check whether a change of a phase difference in +-first order light received from the disc in case of a movement from the innermost circumference to the outermost circumference of the disc occurs and adjustment with the adjustment means moving the actuator plate (AP) on a straight reference surface (RS) in the slide base (SB) is made such that the phase difference between the +-first order light becomes a predetermined value.

7. Optical recording or reproducing apparatus according to claim 6, wherein the adjustment is made such that the phase difference between +-first order light becomes 180 degree.

8. An optical pickup (PU) comprising:
an actuator plate (AP) arranged on a slide base (SB) having at least one guide hole for a guide shaft determining a predetermined distance to a disc motor (DM) in an optical recording or reproducing apparatus and
an adjustment means (AM) for moving the actuator plate (AP) , which holds the objective lens (OL) of the optical pickup (PU), on a straight reference surface (RS) arranged in the slide base (SB) to a position as defined by a reference centre (RC) to achieve an alignment to said disc motor (DM).

9. Optical pickup (PU) according to claim 8, wherein the adjustment means (AM) is a screw for moving the actuator plate (AP) on the straight reference surface (RS) inside the slide base (SB) against a counter spring (CS).

10. Optical pickup (PU) according to claim 8, wherein the reference centre (RC) is a predetermined distance (DS) to at least one guide hole (GH) for the guide shaft (GS) or the reference centre is formed by alignment equipment to which the optical pickup (PU) is applied.
